# EUROPÄISCHE PATENTSCHRIFT

(11) **EP 1 796 935 B1**
(45) Veröffentlichungstag und Bekanntmachung des Hinweises auf die Patenterteilung: **20.04.2011**
(21) Anmeldenummer: 05797073.3
(22) Anmeldetag: 22.09.2005
(51) Int. Cl.: B60N 2/235

(54) **VORRICHTUNG ZUM VERRIEGELN UND ENTRIEGELN EINES ERSTEN BESCHLAGTEILS UND EINES ZWEITEN BESCHLAGTEILS ZUM VERSTELLEN DER NEIGUNG ZWEIER KOMPONENTEN, INSBESONDERE EINES KRAFTFAHRZEUGSITZES, RELATIV ZUEINANDER**
DEVICE FOR LOCKING AND UNLOCKING A FIRST MOUNTING PART AND A SECOND MOUNTING PART IN ORDER TO ADJUST THE INCLINATION OF TWO COMPONENTS, ESPECIALLY OF A MOTOR VEHICLE SEAT, RELATIVE TO EACH OTHER
SYSTEME DE VERROUILLAGE ET DE DEVERROUILLAGE D'UNE PREMIERE ARMATURE ET D'UNE SECONDE ARMATURE POUR REGLER L'INCLINAISON DE DEUX ELEMENTS, EN PARTICULIER D'UN SIEGE DE VEHICULE AUTOMOBILE, L'UN PAR RAPPORT A L'AUTRE

(30) Priorität: 28.09.2004 DE 102004047420
(43) Veröffentlichungstag der Anmeldung: 20.06.2007
(73) Patentinhaber: Johnson Controls GmbH, 51399 Burscheid (DE)
(72) Erfinder: KIENKE, Ingo, 42929 Wermelskirchen (DE); SUBRAMANIAN, Karthikeyan M., 51399 Burscheid (DE); WEBER, Frank, D-51519 Odenthal (DE); GUTJAHR, Ralf, 59174 Kamen (DE)
(74) Vertreter: Schwöbel, Thilo K.
(86) Internationale Anmeldenummer: PCT/EP2005/054746
(87) Internationale Veröffentlichungsnummer: WO 2006/034989

(56) Entgegenhaltungen:
- GB-A- 1 060 922
- US-A- 4 997 223
- PATENT ABSTRACTS OF JAPAN Bd. 1996, Nr. 12, 26. Dezember 1996 (1996-12-26) & JP 08 196372 A (FUJI KIKO CO LTD), 6. August 1996 (1996-08-06)

## Beschreibung

Die vorliegende Erfindung betrifft eine Vorrichtung zum Verriegeln und Entriegeln der Neigungsverstellung eines ersten Beschlagteils relativ zu einem zweiten Beschlagteil, insbesondere eines Kraftfahrzeugsitzes, wobei das erste Beschlagteil und das zweite Beschlagteil ein Gehäuse mit einem Innenraum bilden und auf einer gemeinsamen Achse angeordnet sind, wobei im Innenraum ein Verrastmittel angeordnet ist, umfassend eine Verrastklinke sowie ein korrespondierendes Halte-und Verstellmittel, wobei durch Drehung der Achse das Halte- und Verstellmittel von einer die Verrastung bewirkenden Verriegelungsposition in eine die Verrastung nicht bewirkende Entriegelungsposition reversibel verstellbar ist, wobei die Verrastklinke in der Verriegelungsposition relativ zum ersten Beschlagteil arretierbar vorgesehen ist.

Es sind eine Vielzahl Vorrichtungen zum Verriegeln und Entriegeln der Neigungsverstellung von Beschlagteilen zueinander, insbesondere von Kraftfahrzeugsitzen beispielsweise aus der US 4 997 223 A und derJP 08 196 372 A bekannt**.** Solche Vorrichtungen müssen, insbesondere unter Belastung, beispielsweise bei Verwendung der Vorrichtung für einen Kraftfahrzeugsitz bei einer Last auf die Lehne, leicht und gleichmäßig entriegelbar sein. Weiterhin müssen sie hohen Anforderungen bezüglich der Festigkeit genügen, um der Dauerbelastung, beispielsweise bei Verwendung mit Kraftfahrzeugsitzen, standzuhalten. Auch die Anforderungen an die Sicherheit der Vorrichtungen, insbesondere gegen Selbstöffnung bei einem Unfall, sind sehr hoch, da durch Selbstöffnung bei einem Unfall die Verletzungsgefahr und/oder die Verletzungsfolgen größer sein können.

Die Druckschrift DE 699 08 135 T2 beschreibt eine solche Vorrichtung, die in einem Gehäuse angeordnet ist und ein Halte- und Verstellmittel sowie mehrere Verrastklinken aufweist, wobei das Halte- und Verstellmittel auf einer Drehachse drehfest angeordnet und entgegen der Kraft eines Kraftmittels drehbar ist, wodurch die Verrastklinken entriegelt werden, so dass die Neigung der Beschlagteile zueinander verstellbar ist.

Aufgabe der vorliegenden Erfindung ist eine Vorrichtung zum Verriegeln und Entriegeln der Neigungsverstellung von Beschlagteilen zueinander, insbesondere von Kraftfahrzeugsitzen, die eine verbesserte Sicherheit gegen Selbstöffnung bei einem Unfall aufweist, insbesondere bei Belastung aus einer Vorzugslastrichtung, dennoch leicht entriegelbar ist, eine hohe Festigkeit aufweist, hohen Anforderungen bezüglich der Kompensation interner Toleranzen genügt und weiterhin klein, kostengünstig, einfach zu montieren und kostengünstig zu montieren sein soll.

Die Aufgabe wird gelöst mit einer Vorrichtung gemäß Patentanspruch 1.

Da die Schwenkachse des Halte- und Verstellmittels erfindungsgemäß von der Achse beabstandet ist, wird die Achse bei Belastung der Beschlagteile relativ zueinander, beispielsweise bei Last auf die Lehne eines die Vorrichtung aufweisenden Kraftfahrzeugsitzes, insbesondere bei einem Unfall, im wesentlichen nicht belastet, da die im Betriebsfall und/oder bei einem Unfall wesentlichen Kräfte an der Schwenkachse angreifen.

Durch die Anordnung des Halte- und Verstellmittels auf einer von der Achse beabstandeten Schwenkachse ist die Anordnung der Bauteile der Vorrichtung flexibler möglich. Eine Vorzugslastrichtung, das ist eine Richtung, aus der die Vorrichtung, insbesondere bei einem Unfall, belastet ist, beispielsweise die Richtung aus der eine bei einem Unfall wirkende Gurtlast eines Gurtintegralsitzes auf die Vorrichtung wirkt, kann besser abgestützt werden, indem die relative Lage des Halte-und Verstellmittels zur Verrastklinke angepasst wird, insbesondere indem die Lage der Schwenkachse angepasst wird. Dadurch ist die Vorrichtung, insbesondere bei einer Belastung aus einer Vorzugslastrichtung, besser verriegelt.

Erfindungsgemäß weist die Vorrichtung zwei, besonders bevorzugt gleiche, Verrastmittel auf. Daher ist das Verstellen der Neigung der Beschlagteile relativ zueinander durch mehrere Verrastmittel und/oder redundant gesichert, so dass die Vorrichtung in Bezug auf die Sicherheit gegen Selbstöffnung bei einem Unfall zusätzlich verbessert ist. Weiterhin kann die Vorrichtung dadurch gegebenenfalls bei mehrere Belastungen aus verschiedenen Vorzugslastrichtungen besser verriegelt sein.

Weiterhin weisen die Verrastmittel jeweils eine Schwenkachse auf. Dadurch kann die Vorrichtung symmetrisch aufgebaut sein, so dass trotz erhöhter Bauteilezahl die Anzahl verschiedener Bauteile gering ist, was kostengünstig bezüglich der Lagerhaltung ist. Die Bauteile sind einfach und ggf. automatisch und daher kostengünstig montierbar. Beim Entriegeln einer im wesentlichen symmetrischen Vorrichtung wird die Achse im wesentlichen symmetrisch belastet, so dass die auf sie wirkenden Kräfte zumindest teilweise kompensiert sind.

Die Kräfte, die die Schwenkachsen, insbesondere bei einem Unfall, im wesentlichen aufnehmen, kompensieren sich bei symmetrischer Anordnung der Verrastmittel zueinander zumindest teilweise, wodurch die Belastung der einzelnen Bauteile zumindest teilweise verringert ist. Daher können die Bauteile zumindest teilweise weniger fest dimensioniert werden, wodurch kostengünstigeres Material verwendbar ist.

Bei symmetrischer Anordnung von zwei Verrastmitteln liegen die Schwenkachsen und die Achse vorzugsweise im wesentlichen in einer Ebene.

In einer bevorzugten Ausführungsform weist die Vorrichtung pro Verrastmittel ein Drehmittel auf, die gemeinsam mittels einem Feststellmittel in einer Nennlage mit der Achse drehfest verbunden sind, und wobei das Halte- und Verstellmittel des Verrastmittels mittels dem Drehmittel verstellbar ist. Diese Ausführungsform der vorliegenden Erfindung hat den Vorteil, dass die Verrastmittel immer in einer definierten Position zueinander angeordnet und abhängig voneinander mittels der Drehmittel verstellbar sind und zwar immer ausgehend von derselben relativen Anordnung zueinander. Dadurch können die Verrastmittel auch auf sehr kleinem Raum so zueinander angeordnet werden, dass sie sich beim Verstellen nicht gegenseitig behindern. Weiterhin sind dadurch die internen Toleranzen eines Verrastmittels im wesentlichen unabhängig von den internen Toleranzen der weiteren Verrastmittel und nach außen hin kompensiert. Dadurch ist die Synchronisation mehrerer Vorrichtungen, beispielsweise zur Verstellung eines Kraftfahrzeugsitzes und beispielsweise durch Verbindung der Achse zweier Vorrichtungen miteinander, einfacher im Vergleich zur Synchronisation mehrerer Vorrichtungen, bei denen die Schwenkachse die Achse bildet. Bevorzugt wird als Feststellmittel eine Buchse verwendet.

Besonders bevorzugt weisen das Drehmittel dritte Form- und/oder Kraftschlussmittel und die Halte- und Verstellmittel vierte Form- und/oder Kraftschlussmittel auf, die zumindest teilweise miteinander in Eingriff sind. Das Drehmittel und/oder die dritten und vierten Form- und/oder Kraftschlussmittel übertragen das Entriegelungsmoment von der Achse auf das Verrastmittel.

Als dritte und vierte Form- und/oder Kraftschlussmittel sind solche besonders bevorzugt, die auch bei - geringfügigen - Veränderungen der Lage des Drehmittels zum Verrastmittel noch miteinander in Eingriff sind und dem Nutzer beim Entriegeln der Vorrichtung ein gleichmäßiges Entriegelungsgefühl vermitteln. Daher ist die Verwendung von Verzahnungen vorteilhaft aufgrund ihres gleichförmigen Eingriffs miteinander.

Vorzugsweise umfasst die Vorrichtung pro Verrastmittel einen Kraftspeicher, wobei das Halte- und Verstellmittel des Verrastmittels entgegen der Kraft des Kraftspeichers des Verrastmittels von der Verriegelungsposition in die Entriegelungsposition verstellbar ist. Mittels der Kraft des Kraftspeichers ist jedes Verrastmittel daher in der Verriegelungsposition gesichert. Der Fachmann versteht, dass auch eine Ausführungsform bevorzugt ist, in der die Vorrichtung einen Kraftspeicher zur Sicherung mehrerer Verrastmittel in der Verriegelungsposition aufweist.

In einer bevorzugten Ausführungsform weist das erste Beschlagteil ein erstes Form- und/oder Kraftschlussmittel auf, wobei die zumindest eine Verrastklinke ein zweites Form- und/oder Kraftschlussmittel aufweist, und wobei das erste Form- und/oder Kraftschlussmittel sowie das zweite Form- und/oder Kraftschlussmittel in der Verriegelungsposition miteinander in Eingriff und in der Entriegelungsposition nicht miteinander in Eingriff sind. Als erste und zweite Form- und/oder Kraftschlussmittel sind Verzahnungen bevorzugt. Mittels der Kraft des Kraftspeichers werden die ersten und zweiten Form- und/oder Kraftschlussmittel in Eingriff gehalten.

Erfindungsgemäß weisen die Halte- und Verstellmittel jeweils einen ersten Schaltnocken und einen zweiten Schaltnocken auf, wobei der erste Schaltnocken in Verriegelungsposition jeweils mit der korrespondierenden Verrastklinke zusammenwirkt, wobei der zweite Schaltnocken eine Sicherungsfläche aufweist, die in der Verriegelungsposition des Halte- und Verstellmittels die Verrastklinke des jeweils benachbarten oder gegenüberliegenden Verrastmittels bei einem Unfall zusätzlich sichert, und die von dieser Verrastklinke beabstandet ist, bevorzugt um ca. 0,1 - 0,4mm, besonders bevorzugt um ca. 0,2 - 0,3mm. Bei einem Unfall liegen die Sicherungsflächen bevorzugt an der jeweils benachbarten oder gegenüberliegenden Verrastklinke an. Dadurch ist jede Verrastklinke, insbesondere bei einem Unfall, doppelt abgesichert und die Sicherheit gegen Selbstöffnung verbessert. Außerdem werden die internen Abstützkräfte bei einem Unfall symmetrisch um die Achse herum geleitet, nämlich jeweils über die Anlageflächen der Schaltnocken an die Verrastklinken, wodurch die Festigkeit und Steifigkeit der Vorrichtung, insbesondere bei einem Unfall, erhöht ist. Weiterhin wird die Achse bei einem Unfall im wesentlichen nicht belastet.

Da die Sicherungsfläche von der benachbarten Verrastklinke beabstandet ist, ist sichergestellt, dass sie nicht beim Verriegeln an der benachbarten oder gegenüberliegenden Verrastklinke anliegt, insbesondere nicht, bevor die ersten und zweiten Form- und/oder Kraftschlussmittel miteinander in Eingriff sind. Die Verrastklinken können daher mittels den Halte- und Verstellmitteln ungehindert durch die Sicherungsflächen in die Verriegelungsposition verstellt werden. Dadurch ist immer ein im wesentlichen optimaler Eingriff, und bei Verwendung von Verzahnungen als Form- und/oder Kraftschlussmittel eine im wesentlichen optimale Zahnüberdeckung, der ersten und zweiten Form- und/oder Kraftschlussmittel gewährleistet. Es ist zusätzlich bevorzugt, dass die Sicherungsfläche im wesentlichen kreisförmig ist, um das ungehinderte Verstellen der benachbarten oder gegenüberliegenden Verrastklinke von der Entriegelungsposition in die Verriegelungsposition noch sicherer zu gewährleisten.

Der erste Schaltnocken des Halte- und Verstellmittels hält, insbesondere bei einem Unfall, das zweite Form- und/oder Kraftschlussmittel der Verrastklinke in einer bevorzugten Richtung in Eingriff mit dem ersten Form- und/oder Kraftschlussmittel des ersten Beschlagteils. Durch den erfindungsgemäßen Abstand der Schwenkachse von der Achse kann diese Richtung flexibel gewählt werden, so dass die Vorrichtung bei einer Belastung, insbesondere aus einer Vorzugslastrichtung, die mit dieser Richtung im wesentlichen übereinstimmt, besser verriegelt ist. Der Fachmann versteht, dass das Abstützen der Verrastklinke am ersten Schaltnocken, bei Belastung, insbesondere aus der Vorzugslastrichtung, auch durch die Form des Halte- und Verstellmittels und der Verrastklinke, insbesondere der zweiten Form- und/oder Kraftschlussmittel und ihren Eingriff mit den ersten Form- und/oder Kraftschlussmitteln des ersten Beschlagteils, bestimmt ist.

In einer bevorzugten Ausführungsform weist das zweite Beschlagteil eine Kulisse auf, an der die zumindest eine Verrastklinke zumindest teilweise anliegt, so dass die Verrastklinke beim Verstellen zumindest teilweise entlang der Kulisse und daher definiert geführt wird. In der Entriegelungsposition ist die Verrastklinke daher gegenüber der Verriegelungsposition verschoben. Da die Verrastklinke zu jedem Zeitpunkt an der Kulisse zumindest teilweise anliegt, ist die Lastaufnahmefähigkeit der Vorrichtung sehr groß, und zwar beim Verstellen von und in die Verriegelungsposition sowie in der Verriegelungs- und in der Entriegelungsposition. Die Verrastklinke ist durch die Führung entlang der Kulisse leicht verstellbar und verrutscht nicht. Außerdem werden aufgrund der Kulisse keine zusätzlichen Bauteile zur Führung der Verrastklinke benötigt, so dass die Bauteilezahl gering ist. Vorzugsweise ist die Verrastklinke so geformt, dass sich die Sicherungsfläche beim Verstellen des Halte- und Verstellmittels von der Verrastklinke entfernt, bevor die zweiten Form- und/oder Kraftschlussmittel der Verrastklinke mittels dem ersten Schaltnocken außer Eingriff mit den ersten Form- und/oder Kraftschlussmitteln des ersten Beschlagteils verstellt werden. Besonders bevorzugt weist die Verrastklinke eine Anformung auf, die beim Entriegeln der Verrastklinke mit dem ersten Schaltnocken in Anlage gerät, so dass beim weiteren Drehen des Schaltnockens um die Drehachse die Verrastklinke entlang der Kulisse verschoben wird und die ersten und zweiten Form- und/oder Kraftschlussmittel außer Eingriff geraten. Dabei wird das Verstellen nicht durch die Sicherungsfläche des zweiten Schaltnockens behindert.

Durch die Anordnung von zwei und bevorzugt zwei gleichen Verrastmitteln die mittels Halte- und Verstellmitteln, deren Schwenkachse erfindungsgemäß gegenüber der Drehachse beabstandet sind, ist die Vorrichtung bei Belastung, insbesondere aus einer Vorzugslastrichtung, besser verriegelt. Da die Halte- und Verstellmittel jeweils mittels Drehmitteln ausgehend von einer Nennlage verstellt werden, sind die internen Toleranzen der Vorrichtung nach außen hin im wesentlichen kompensiert. Durch die Anordnung zweier Schaltnocken, von denen der erste Schaltnocken jeweils die korrespondierende und der zweite Schaltnocken jeweils die benachbarte oder gegenüberliegende Verrastklinke gegen Entriegelung sichert, ist die Sicherheit gegen Selbstöffnung, insbesondere bei einem Unfall, sowie die Festigkeit und Steifigkeit der Vorrichtung hoch. Außerdem werden Kräfte, die bei einem Unfall auf die Vorrichtung wirken, um die Entriegelungsachse herumgeleitet, da die Verrastklinke bei einem Unfall jeweils durch den ersten Schaltnocken des korrespondierenden Halte- und Verstellmittels und den zweiten Schaltnocken des benachbarten oder gegenüberliegenden Halte- und Verstellmittels gesichert ist. Die Verrastklinken und Halte- und Verstellmittel der Vorrichtung stützen sich daher gegenseitig ab, wodurch die Vorrichtung eine höhere Festigkeit und Steifigkeit aufweist. Die Symmetrie der Vorrichtung vereinfacht die Montage. Die Entriegelungsachse wird bei Belastung, insbesondere bei einem Unfall, im wesentlichen nicht belastet.

Im folgenden wird die Erfindung durch **Figuren** beschrieben. Die Beschreibungen sind lediglich beispielhaft und schränken den allgemeinen Erfindungsgedanken nicht ein.
- **Figur 1**: zeigt eine Explosionsdarstellung einer erfindungsgemäßen Vorrichtung.
- **Figur 2**: zeigt in den Darstellungen **a** und **b** einen Querschnitt quer zur Achse durch die Vorrichtung der **Figur 1**, sowie in Darstellung **c** eine perspektivische Ansicht des Querschnitts der Darstellung **b.**

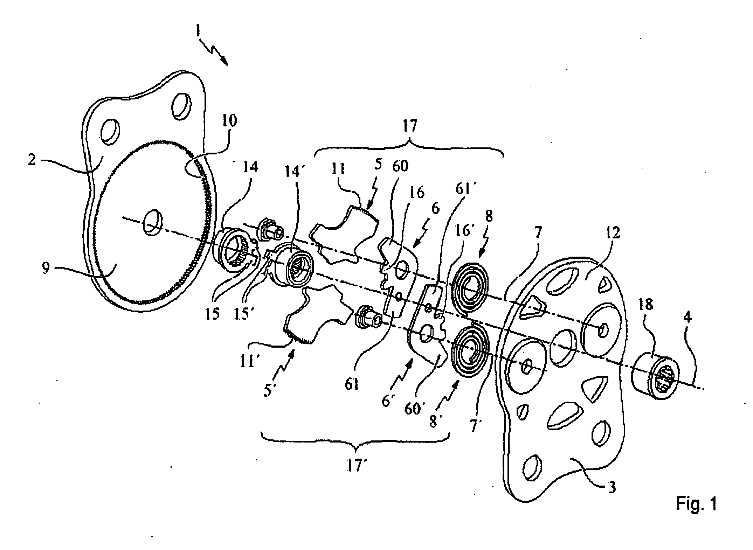

**Figur 1** zeigt eine Explosionsdarstellung einer erfindungsgemäßen Vorrichtung 1. Die Vorrichtung 1 umfasst ein erstes Beschlagteil 2 sowie ein zweites Beschlagteil 3, die auf einer gemeinsamen Achse 4 angeordnet sind und ein Gehäuse mit einem Innenraum bilden. In der **Figur 1** ist die den Innenraum zumindest teilweise umgebende Innenfläche 9 des ersten Beschlagteils 2 sichtbar. Im Innenraum des Gehäuses sind zwei Verrastmittel 17, 17' angeordnet, die jeweils eine Verrastklinke 5, 5', ein korrespondierendes Halte- und Verstellmittel 6, 6' sowie einen Kraftspeicher 8, 8`, hier jeweils eine Spiralfeder, umfassen und eine Schwenkachse 7, 7' aufweisen, die im wesentlichen parallel zur Achse 4 vorgesehen und von dieser beabstandet ist.

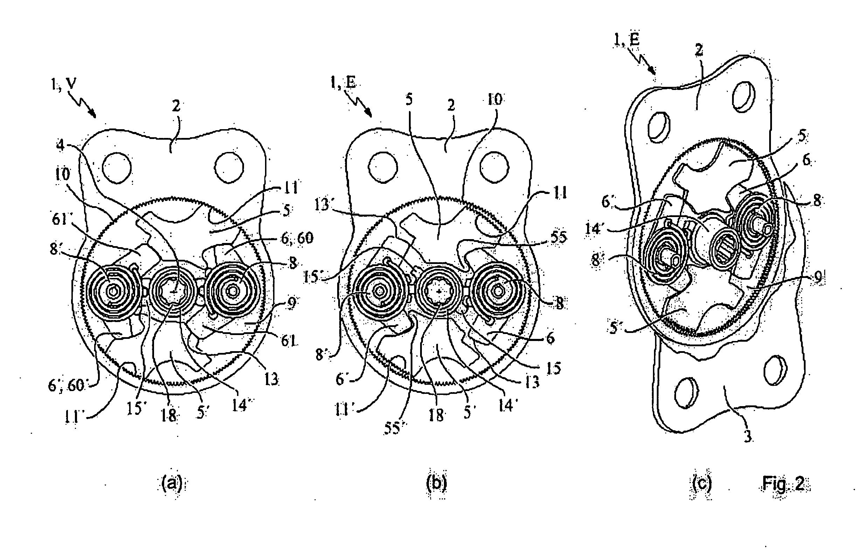

Die folgenden Ausführungen gelten jeweils für beide Verrastmittel 17, 17'. Das Halte-und Verstellmittel 6, 6' sowie der Kraftspeicher 8, 8' des Verrastmittels 17, 17' ist auf der Schwenkachse 7, 7' des Verrastmittels 17,17' angeordnet. Der Fachmann versteht, dass die Anordnung des Kraftspeichers 8, 8' auch anderweitig erfolgen kann oder dass mehrere Kraftspeicher 8, 8' durch einen Einzigen ersetzbar sind. Die Anordnung des Kraftspeichers 8, 8' auf der Schwenkachse 7, 7' ist aus Platzgründen vorteilhaft. Das Halte- und Verstelmittels 6, 6' sowie der Kraftspeicher 8, 8' sind am zweiten Beschlagteil 3 vorgesehen. Das Halte- und Verstellmittel 6, 6' weist einen ersten Schaltnocken 60, 60' auf, der in **Figur 2a** gezeigt ist, der mit der korrespondierenden Verrastklinke 5, 5' des Verrastmittels 17, 17' in einer Verriegelungsposition V zusammenwirkt, in der die Neigung des ersten Beschlagteils 2 relativ zum zweiten Beschlagteil 3 gegen Verstellen mittels der Kraft des korrespondierenden Kraftspeichers 8, 8' gesichert ist. In dieser Verriegelungsposition V ist ein erstes Form- und/oder Kraftschlussmittel 10 des ersten Beschlagteils 2 mit einem zweiten Form- und/oder Kraftschlussmittel 11, 11' der Verrastklinke 5, 5' in Eingriff. Weiterhin weist das Halte- und Verstellmittel 6, 6' einen zweiten Schaltnocken 61, 61' auf, der in **Figur 2a** gezeigt ist, der eine Sicherungsfläche 13, 13' aufweist, die von der Verrastklinke 5', 5 des benachbarten oder gegenüberliegenden Verrastmittels 17', 17 beabstandet ist, das ist in der vorliegenden Ausführungsform das andere Verrastmittel, und dieses Verrastmittel 17', 17 in der Verriegelungsposition V bei einem Unfall zusätzlich gegen Selbstöffnung sichert. Außerdem weist das Halte- und Verstellmittel 6, 6' sein viertes Form- und/oder Kraftschlussmittel 16, 16' auf, hier eine Verzahnung, das mit einem dritten Form- und Kraftschlussmittel 15, 15', hier ebenfalls eine Verzahnung, eines Drehmittels 14, 14', das mittels einem Feststellmittel 18, hier eine Buchse, drehfest auf der Achse 4 angeordnet ist, in Eingriff ist, so dass beim Drehen der Achse 4 im Uhrzeigersinn das Halte- und Verstellmittel 6, 6' von der Verriegelungsposition V mittels der dritten Form- und/oder Kraftschlussmittel 16, 16` und vierten Form- und/oder Kraftschlussmittel 15, 15' reversibel in eine Entriegelungsposition E verstellt wird, wobei sich das Halte- und Verstellmittel 6, 6' entgegen der Kraft des Kraftspeichers 8, 8' um die Schwenkachse 7, 7' dreht. Der Fachmann versteht, dass auch die drehfeste Verbindung mehrerer Drehmittel 14, 14' zur Achse 4, beispielsweise mittels einer Buchse 18, im wesentlichen spielfrei herstellbar ist. Beim Drehen des Hafte- und Verstellmittels 6, 6' im Uhrzeigersinn gerät der erste Schaltnocken 60, 60' des Halte- und Verstellmittels 6, 6' in Anlage mit einer Anformung 55, 55', die in **Figur 2b** gezeigt ist, der korrespondierenden Verrastklinke 5, 5' und verschiebt die Verrastklinke 5, 5' entlang einer Kulisse 12, die am zweiten Beschlagteil 3 vorgesehen ist und an der die Verrastklinke 5, 5` zumindest teilweise anliegt. Dadurch ist das zweite Form- und/oder Kraftschlussmittel 11, 11'der Verrastklinke 5, 5` nicht mehr in Eingriff mit dem ersten Form- und/oder Kraftschlussmittel 10 des ersten Beschlagteils 2, so dass die Neigung des ersten Beschlagteils 2 in der Entriegelungsposition E relativ zum zweiten Beschlagteil 3 verstellbar ist. Der zweite Schaltnocken 61, 61' wird beim Drehen des Halte- und Verstellmittels 6, 6' um die Schwenkachse 7, 7' so verstellt, dass er die benachbarte Verrastklinke 5, 5' beim Verschieben entlang der Kulisse 12 nicht behindert. Er weist eine bevorzugt kreisförmige Sicherungsfläche 13, 13' auf, damit das Halte- und Verstellmittel 6, 6' ungehindert durch die benachbarte Verrastklinke 5', 5 von der Verriegelungsposition **V** in die Entriegelungsposition **E** verstellbar ist. Damit das Halte- und Verstellmittel **6, 6'** auch beim Verstellen von der Entriegelungsposition **É** in die Verriegelungsposition **V** nicht mit der benachbarten Verrastklinke **5', 5** verkantet, ist die Sicherungsfläche **13,13'** von der Verrastklinke **5', 5** beabstandet. Daher sind die ersten Form- und/oder Kraftschlussmittel **10** und zweiten Form- und/oder Kraftschlussmittel **11, 11'** in der Verriegelungsposition V immer im wesentlichen in Eingriff miteinander.

**Figur 2** zeigt in den Darstellungen **a** und **b** einen Querschnitt quer zu der Achse **4** durch die erfindungsgemäße Vorrichtung **1** der **Figur 1**, sowie in Darstellung **c** eine perspektivische Ansicht des Querschnitts der Darstellung **b**. Die Darstellung **a** zeigt die Vorrichtung **1** in der Verriegelungsposition **V**, die Darstellungen **b** und **c** in der Entriegelungsposition E des Halte- und Verstellmittels **6, 6'**. Sichtbar ist das zweite Beschlagteil 2 sowie zwei Verrastmittel **17, 17'**, die im Innenraum des Gehäuses punktsymmetrisch zur Achse 4, die durch ein Kreuz angedeutet ist, angeordnet sind, wobei der Innenraum des Gehäuses zumindest teilweise von der Innenfläche 9 des zweiten Beschlagteils **2** umgeben ist. Die Darstellungen **a - c zeigen die** Verrastklinken **5, 5'** jeweils mit dem zweiten Form- und/oder Kraftschlussmittel **11, 11'**, **die Halte**- und Verstellmittel 6, 6' jeweils mit dem ersten Schaltnocken 60, 60', dem zweiten Schaltnocken **61, 61'**, der Sicherungsfläche **13, 13'** sowie dem vierten Form- und/oder Kraftschlussmittel **16, 16'**, die Kraftspeicher **8, 8'** und die Drehmittel **14, 14'** jeweils mit dem dritten Form- und/oder Kraftschlussmittel **15, 15'**. In Darstellung a ist jeweils das zweite Form- und/oder Kraftschlussmittel **11, 11'** der Verrastklinken **5, 5'** in Eingriff mit dem ersten Form- und/oder Kraftschlussmittel **10** des ersten Beschlagteils 2 und mittels dem ersten Schaltnocken **60, 60'** des korrespondierenden Halte- und Verstellmittels **6, 6'** gesichert. Der zweite Schaltnocken **61, 61'** sichert die jeweils benachbarte oder gegenüberliegende Verrastklinke **5', 5** in der Verriegelungsposition V des Halte- und Verstellmittels **6, 6'** bei einem Unfall. In Darstellung **b** und **c** sind die Haltenocken 6, 6' jeweils in Anlage an die korrespondierende Verrastklinke **5, 5'** und die zweiten Form- und/oder Kraftschlussmittel **11, 11'** nicht in Eingriff mit dem ersten Form- und oder Kraftschlussmittel **10** des ersten Beschlagteils **2**. Die Vorrichtung **1** befindet sich also in der Entriegelungsposition **E**, in die sie von der Verriegelungsposition V ausgehend durch Drehen der Achse **4** im Uhrzeigersinn verstellbar ist, wobei der erste Schaltnocken **60, 60'** in Anlage mit einer Anformung **55, 55'** der Verrastklinke **5, 5'** gerät und diese entlang der Kulisse **12** verschiebt, so dass die ersten und zweiten Form- und/oder Kraftschlussmittel10, **11, 11'** außer Eingriff sind. Dadurch kann in der Entriegelungsposition E des Halte- und Verstellmittels **6, 6'** die Neigung des ersten Beschlagteils **2** relativ zum zweiten Beschlagteil **3**, das in Darstellung **c** sichtbar ist, verstellt werden.

### Bezugszeichenliste:

- 1: Vorrichtung
- 2: Erstes Beschlagteil
- 3: Zweites Beschlagteil
- 4: Achse
- 5, 5': Verrastklinke
- 55, 55': Anformung
- 6, 6': Halte- und Verstellmittel
- 60, 60': Erster Schaltnocken
- 61, 61': Zweiter Schaltnocken
- 7, 7': Schwenkachse
- 8, 8': Kraftspeicher
- 9: Den Innenraum des Gehäuses zumindest teilweise bildende Innenfläche
- 10: Erstes Form- und/oder Kraftschlussmittel des ersten Beschlagteils
- 11, 11': Zweites Form- und/oder Kraftschlussmittel der Verrastklinke
- 12: Kulisse
- 13, 13': Sicherungsfläche
- 14, 14': Drehmittel
- 15, 15': Drittes Form- und/oder Kraftschlussmittel des Drehmittels
- 16, 16': Viertes Form- und/oder Kraftschlussmittel des Haltenockens
- 17, 17': Verrastmittel
- 18: Feststellmittel

## Patentansprüche

1. Vorrichtung (1) zum Verriegeln und Entriegeln der Neigungsverstellung eines ersten Beschlagteils (2) relativ zu einem zweiten Beschlagteil (3), insbesondere eines Kraftfahrzeugsitzes, wobei das erste Beschlagteil (2) und das zweite Beschlagteil (3) ein Gehäuse mit einem Innenraum (9) bilden und auf einer gemeinsamen Achse (4) angeordnet sind, wobei im Innenraum (9) zwei Verrastmittel (17, 17') angeordnet sind, umfassend jeweils eine Verrastklinke (5, 5') sowie jeweils ein mit der jeweiligen Verrastklinke (5, 5') korrespondierendes Halte- und Verstellmittel (6, 6'), wobei die Verrastklinken (5, 5') in der Verriegelungsposition (V) relativ zum ersten Beschlagteil (2) arretierbar sind, wobei durch Drehung der Achse (4) die Halte- und Verstellmittel (6, 6') von einer die Verrastung bewirkenden Verriegelungsposition (V) in eine die Verrastung nicht bewirkende Entriegelungsposition (E) reversibel verstellbar sind,
wobei sich jedes Halte- und Verstellmittel (6, 6') dabei jeweils um eine Schwenkachse (7, 7') dreht, die im wesentlichen parallel zur Drehachse (4) vorgesehen und von dieser beabstandet sind,
**dadurch gekennzeichnet, dass** die Halte- und Verstellmittel (6, 6') jeweils einen ersten Schaltnocken (60, 60') und einen zweiten Schaltnocken (61, 61') aufweisen, wobei der erste Schaltnocken (60, 60') in Verriegelungsposition (V) jeweils mit der korrespondierenden Verrastklinke (5, 5') zusammenwirkt, wobei der zweite Schaltnocken (61, 61') eine Sicherungsfläche (13, 13') aufweist, die in der Verriegelungsposition (V) des Halte- und Verstellmittels (6, 6') die Verrastklinke (5, 5') des jeweils benachbarten oder gegenüberliegenden Verrastmittels (17, 17') bei einem Unfall zusätzlich sichert, und die von dieser Verrastklinke (5, 5') beabstandet ist.

2. Vorrichtung (1) nach Anspruch 1, **dadurch gekennzeichnet, dass** die Verrastmittel (17, 17') baugleich vorgesehen sind.

3. Vorrichtung (1) nach einem der vorherigen Ansprüche, **dadurch gekennzeichnet, dass** sie pro Verrastmittel (17, 17') ein Drehmittel (14, 14') aufweist, die gemeinsam mittels einem Feststellmittel (18) in einer Nennlage mit der Achse (4) drehfest verbunden sind, und dass das Halte- und Verstellmittel (6, 6') des Verrastmittels (17, 17') mittels dem Drehmittel (14, 14') verstellbar ist.

4. Vorrichtung (1) nach einem der vorherigen Ansprüche, **dadurch gekennzeichnet, dass** die Drehmittel (14, 14') dritte Form- und/oder Kraftschlussmittel (15, 15') und die Halte- und Verstellmittel (6, 6') vierte Form- und/oder Kraftschlussmittel (16, 16') aufweisen, die zumindest teilweise miteinander in Eingriff sind.

5. Vorrichtung (1) nach einem der vorherigen Ansprüche, **dadurch gekennzeichnet, dass** sie pro Verrastmittel (17, 17') einen Kraftspeicher (8, 8') umfasst, wobei das Halte- und Verstellmittel (6, 6') des Verrastmittels (17, 17') entgegen der Kraft des Kraftspeichers (8, 8') von der Verriegelungsposition (V) in die Entriegelungsposition (E) verstellbar ist.

6. Vorrichtung nach einem der vorherigen Ansprüche, **dadurch gekennzeichnet, dass** das erste Beschlagteil (2) ein erstes Form- und/oder Kraftschlussmittel (10) aufweist, dass die zumindest eine Verrastklinke (5, 5') ein zweites Form- und/oder Kraftschlussmittel (11, 11') aufweist, und dass das erste Form- und/oder Kraftschlussmittel (10) sowie das zweite Form- und/oder Kraftschlussmittel (11, 11') in der Verriegelungsposition (V) miteinander in Eingriff und in der Entriegelungsposition (E) nicht miteinander in Eingriff sind.

7. Vorrichtung nach einem der vorherigen Ansprüche, **dadurch gekennzeichnet, dass** der Abstand der Sicherungsfläche (13, 13') zur Verrastklinke (5, 5') bevorzugt ca. 0,1 - 0,4mm, bevorzugt um ca. 0,2 - 0,3mm beträgt.

8. Vorrichtung nach einem der vorherigen Ansprüche, **dadurch gekennzeichnet, dass** die Sicherungsfläche (13, 13') im wesentlichen kreisförmig ist.

9. Vorrichtung nach einem der vorherigen Ansprüche, **dadurch gekennzeichnet, dass** das zweite Beschlagteil (3) eine Kulisse (12) aufweist, an der die zumindest eine Verrastklinke (5, 5') zumindest teilweise anliegt.

## Claims

1. Device (1) for locking and unlocking the inclined adjustment of a first mounting part (2) relative to a second mounting part (3), especially of a motor vehicle seat, the first mounting part (2) and the second mounting part (3) forming a housing with an interior (9) and being arranged on a common shaft (4), two latching means (17, 17'), each comprising a latching pawl (5, 5') as well as in each case holding and adjusting means (6, 6') which corresponds to the respective latching pawl (5, 5'), being arranged in the interior (9), the latching pawls (5, 5') being able to be locked in the locked position (V) relative to the first mounting part (2), the holding and adjusting means (6, 6') being able to be reversibly adjusted from a locked position (V) effecting the latching into an unlocked position (E) not effecting the latching by rotating the shaft (4), in this case each holding and adjusting means (6, 6') rotating respectively about a swivel pin (7, 7') which is provided substantially parallel to the rotating shaft (4) and is spaced apart therefrom, **characterized in that** the holding and adjusting means (6, 6') respectively comprise a first operating cam (60, 60') and a second operating cam (61, 61'), the first operating cam (60, 60') in the locked position (V) respectively cooperating with the corresponding latching pawl (5, 5'), the second operating cam (61, 61') having a securing surface (13, 13') which, in the locked position (V) of the holding and adjusting means (6, 6'), additionally secures the latching pawl (5, 5') of the respectively adjacent or opposing latching means (17, 17') during an accident, and which is spaced apart from said latching pawl (5, 5').

2. Device (1) according to Claim 1, **characterized in that** the latching means (17, 17') are of identical construction.

3. Device (1) according to one of the preceding claims, **characterized in that** it comprises one rotating means (14, 14') per latching means (17, 17'), which are connected together fixedly in terms of rotation to the shaft (4) by a securing means (18) in a nominal position, and **in that** the holding and adjusting means (6, 6') of the latching means (17, 17') may be adjusted by means of the rotating means (14, 14').

4. Device (1) according to one of the preceding claims, **characterized in that** the rotating means (14, 14') comprise third positive and/or non-positive connection means (15, 15') and the holding and adjusting means (6, 6') comprise fourth positive and/or non-positive connection means (16, 16') which are at least partially in engagement with each other.

5. Device (1) according to one of the preceding claims, **characterized in that** it comprises one energy storage device (8, 8') per latching means (17, 17'), the holding and adjusting means (6, 6') of the latching means (17, 17') being able to be adjusted counter to the force of the energy storage device (8, 8') from the locked position (V) into the unlocked position (E).

6. Device according to one of the preceding claims, **characterized in that** the first mounting part (2) comprises a first positive and/or non-positive connection means (10), **in that** the at least one latching pawl (5, 5') has a second positive and/or non-positive connection means (11, 11') and **in that** the first positive and/or non-positive connection means (10) as well as the second positive and/or non-positive connection means (11, 11') are in engagement with each other in the locked position (V) and are not in engagement with each other in the unlocked position (E).

7. Device according to one of the preceding claims, **characterized in that** the spacing of the securing surface (13, 13') from the latching pawl (5, 5') is preferably approximately 0.1 - 0.4 mm, preferably approximately 0.2 - 0.3 mm.

8. Device according to one of the preceding claims, **characterized in that** the securing surface (13, 13') is substantially circular.

9. Device according to one of the preceding claims, **characterized in that** the second mounting part (3) comprises a slotted link (12), against which the at least one latching pawl (5, 5') at least partially bears.

## Revendications

1. Dispositif (1) de verrouillage et de déverrouillage du mouvement d'inclinaison d'une première armature (2) par rapport à une deuxième armature (3), notamment d'un siège de véhicule automobile, la première armature (2) et la deuxième armature (3) formant un boîtier avec un espace intérieur (9) et étant disposées sur un axe commun (4), sachant que deux moyens d'enclenchement (17, 17') sont disposés dans l'espace intérieur (9), lesdits moyens comprenant respectivement un cliquet d'enclenchement (5, 5') ainsi que respectivement un moyen d'arrêt et de déplacement (6, 6') correspondant au cliquet d'enclenchement (5, 5') respectif, les cliquets d'enclenchement (5, 5') pouvant être immobilisés dans la position de verrouillage (V) par rapport à la première armature (2), les moyens d'arrêt et de déplacement (6, 6') pouvant être déplacés de façon réversible d'une position de verrouillage (V) provoquant l'enclenchement dans une position de déverrouillage (E) n'entraînant pas d'enclenchement, par rotation de l'axe (4), chaque moyen d'arrêt et de déplacement (6, 6') tournant respectivement pour ce faire autour d'un axe de pivotement (7, 7') qui est prévu pour l'essentiel parallèlement à l'axe de rotation (4) et qui s'écarte de lui, **caractérisé en ce que** les moyens d'arrêt et de déplacement (6, 6') comportent respectivement une première came de commutation (60, 60') et une deuxième came de commutation (61, 61'), la première came de commutation (60, 60') interagissant respectivement, en position de verrouillage (V), avec le cliquet d'enclenchement (5, 5') correspondant, la deuxième came de commutation (61, 61') comportant une surface d'arrêt (13, 13') qui bloque en outre, dans la position de verrouillage (V) du moyen d'arrêt et de déplacement (6, 6'), le cliquet d'enclenchement (5, 5') du moyen d'enclenchement (17, 17') respectivement connexe ou opposé en cas d'accident et est placée à une certaine distance de ce cliquet d'enclenchement (5, 5').

2. Dispositif (1) selon la revendication 1, **caractérisé en ce qu'**il est prévu que les moyens d'enclenchement (17, 17') soient de construction identique.

3. Dispositif (1) selon l'une quelconque des revendications précédentes, **caractérisé en ce qu'**il comprend pour chaque moyen d'enclenchement (17, 17') un moyen de rotation (14, 14'), lesdits moyens de rotation étant reliés ensemble fixement sans rotation avec l'axe (4) dans une position nominale, à l'aide d'un moyen de fixation (18), et **en ce que** le moyen d'arrêt et de déplacement (6, 6') du moyen d'enclenchement (17, 17') peut être déplacé à l'aide du moyen de rotation (14, 14').

4. Dispositif (1) selon l'une quelconque des revendications précédentes, **caractérisé en ce que** les moyens de rotation (14, 14') comprennent des troisièmes moyens de complémentarité de formes et/ou de forces (15, 15') et **en ce que** les moyens d'arrêt et de déplacement (6, 6') comportent des quatrièmes moyens de complémentarité de formes et/ou de forces (16, 16') s'engrenant au moins en partie entre eux.

5. Dispositif (1) selon l'une quelconque des revendications précédentes, **caractérisé en ce qu'**il comprend un accumulateur de force (8, 8') pour chaque moyen d'enclenchement (17, 17'), le moyen d'arrêt et de déplacement (6, 6') du moyen d'enclenchement (17, 17') pouvant être déplacé, contre la force de l'accumulateur de force (8, 8'), de la position de verrouillage (V) dans la position de déverrouillage (E).

6. Dispositif selon l'une quelconque des revendications précédentes, **caractérisé en ce que** la première armature (2) comprend un premier moyen de complémentarité de formes et/ou de forces (10), **en ce que** l'au moins un cliquet d'enclenchement (5, 5') comprend un deuxième moyen de complémentarité de formes et/ou de forces (11, 11') et **en ce que** le premier moyen de complémentarité de formes et/ou de forces (10) ainsi que le deuxième moyen de complémentarité de formes et/ou de forces (11, 11') sont engrenés l'un l'autre dans la position de verrouillage (V) et ne sont pas engrenés l'un l'autre dans la position de déverrouillage (E).

7. Dispositif selon l'une quelconque des revendications précédentes, **caractérisé en ce que** l'écart entre la surface d'arrêt (13, 13') et le cliquet d'enclenchement (5, 5') est de préférence compris dans la plage allant de 0,1 à 0,4 mm environ et de préférence dans la plage allant de 0,2 à 0,3 mm environ.

8. Dispositif selon l'une quelconque des revendications précédentes, **caractérisé en ce que** la surface d'arrêt (13, 13') prend pour l'essentiel une forme de cercle.

9. Dispositif selon l'une quelconque des revendications précédentes, **caractérisé en ce que** la deuxième armature (3) comporte un coulisseau (12) contre lequel repose au moins en partie l'au moins un cliquet d'enclenchement (5, 5').
